# EUROPEAN PATENT APPLICATION

(11) **EP 4 557 411 A1**
(43) Date of publication of application: **21.05.2025**
(21) Application number: 23839537.0
(22) Date of filing: 04.07.2023
(51) Int. Cl.: H01M 8/0612, C01B 3/26, C01B 3/38, C07C 5/327, C07C 13/16, C07C 13/48, H01M 8/04007, H01M 8/04014, H01M 8/12, H01M 8/2475

(54) **FUEL CELL MODULE AND FUEL CELL DEVICE**

(30) Priority: 15.07.2022 JP 2022114389
(71) Applicant: Kyocera Corporation, Kyoto-shi, Kyoto 612-8501 (JP)
(72) Inventor: YAMAUCHI, Kyosuke, Kyoto-shi, Kyoto 612-8501 (JP); OKADA, Michitada, Kyoto-shi, Kyoto 612-8501 (JP); SHIGEHISA, Takashi, Kyoto-shi, Kyoto 612-8501 (JP)
(74) Representative: TBK
(86) International application number: PCT/JP2023/024822
(87) International publication number: WO 2024/014365

(57) **Abstract**

A fuel battery module includes a container, a fuel battery, a combustion unit, and a first reactor. The fuel battery supplies unreacted fuel to the combustion unit along a flow path for an exhaust gas containing the unreacted fuel. The combustion unit combusts the unreacted fuel. The first reactor is positioned opposite the combustion unit. The first reactor produces at least hydrogen and a dehydrogenation product from an organic hydride through a dehydrogenation reaction.

## Description

### CROSS-REFERENCE TO RELATED APPLICATIONS

This application claims priority from Japanese Patent Application No. 2022-114389 filed in Japan on July 15, 2022, and the entire disclosure of this application is hereby incorporated by reference.

### TECHNICAL FIELD

The present disclosure relates to fuel battery modules and fuel battery devices.

### BACKGROUND OF INVENTION

Organic hydrides are known to be used for the purpose of stably storing and transporting hydrogen in the utilization of hydrogen energy. Dehydrogenation of organic hydrides is typically an endothermic reaction and therefore requires a heat source. In fuel batteries that generate electricity using hydrogen as the reaction source, high temperatures are created by the power generation reaction, and therefore use of organic hydrides as a heat source has been proposed (see Patent Literature 1).

### CITATION LIST

### PATENT LITERATURE

Patent Literature 1: Japanese Unexamined Patent Application Publication No. 2013-143179

### SUMMARY

In a First Aspect, a fuel battery module includes a container, a fuel battery, a combustion unit, and a first reactor.

The fuel battery is housed in the container.

The combustion unit is housed in the container and configured to combust unreacted fuel, from the fuel battery, supplied thereto along a flow path for an exhaust gas containing the unreacted fuel.

The first reactor is housed in the container, positioned opposite the combustion unit, and configured to produce at least hydrogen and a dehydrogenation product from an organic hydride through a dehydrogenation reaction.

At least a portion of the hydrogen produced by the first reactor is supplied to the fuel battery as the fuel.

In a Second Aspect, a fuel battery device includes a fuel battery module and a storage unit.

The fuel battery module includes a container, a fuel battery, a combustion unit, and a first reactor.

The fuel battery is housed in the container.

The combustion unit is housed in the container and configured to combust unreacted fuel, from the fuel battery, supplied thereto along a flow path for an exhaust gas containing the unreacted fuel.

The first reactor is housed in the container, positioned opposite the combustion unit, and configured to produce at least hydrogen and a dehydrogenation product from an organic hydride through a dehydrogenation reaction.

At least a portion of the hydrogen produced by the first reactor is supplied to the fuel battery as the fuel.

The storage unit is connected to the first reactor via a first heat exchanger and a second heat exchanger and configured to store the dehydrogenation product.

### BRIEF DESCRIPTION OF THE DRAWINGS

FIG. 1 is a schematic configuration diagram of a fuel battery device including a fuel battery module according to this embodiment.
FIG. 2 is a configuration diagram illustrating an example configuration of a first reactor, a second reactor, and a combustion unit in FIG. 1.
FIG. 3 is a configuration diagram illustrating another example configuration of the first reactor, the second reactor, and the combustion unit in FIG. 1.

### DESCRIPTION OF EMBODIMENTS

Hereafter, an embodiment of a fuel battery module to which the present disclosure has been applied will be described while referring to the drawings.

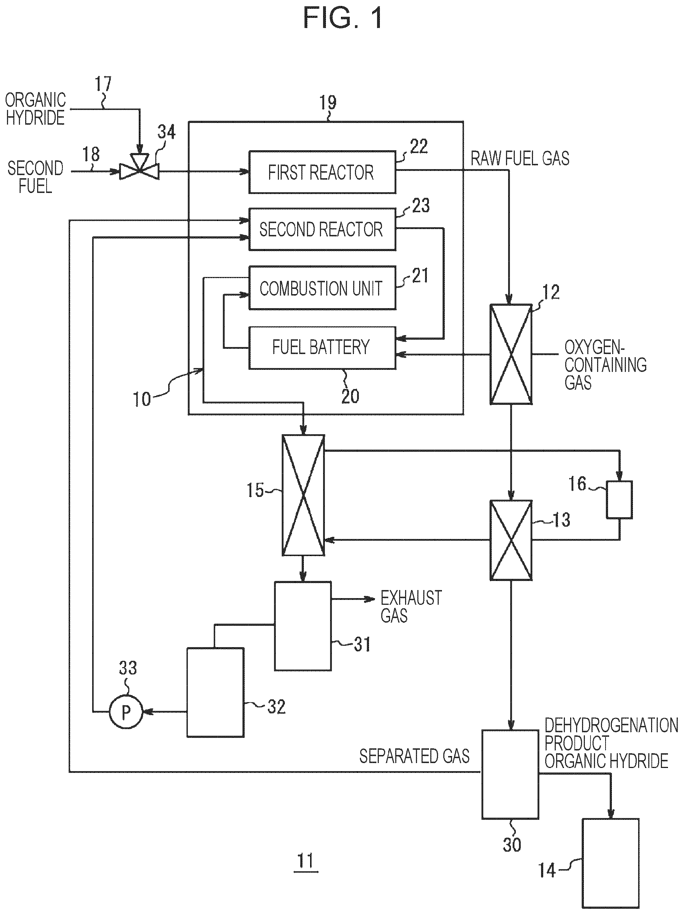

As illustrated in FIG. 1, a fuel battery device 11 includes a fuel battery module 10 according to an embodiment of this disclosure. The fuel battery device 11 includes the fuel battery module 10, a first heat exchanger 12, a second heat exchanger 13, and a storage unit 14. The fuel battery device 11 may further include a third heat exchanger 15, a heat sink 16, a first supply channel 17, and a second supply channel 18.

The fuel battery module 10 includes a container 19, a fuel battery 20, a combustion unit 21, and a first reactor 22. The fuel battery module 10 may further include a second reactor 23.

The container 19 houses the fuel battery 20, the combustion unit 21, and the first reactor 22. The container 19 may house the second reactor 23.

The fuel battery 20 may be a cell stack in which fuel cells are stacked. The fuel battery 20 may include multiple cell stacks. Each fuel cell is, for example, a solid oxide fuel cell (SOFC) and generates electricity through an electrochemical reaction using an oxygen-containing gas contained in the air and a fuel such as hydrogen discharged from the first reactor 22, as described below. The fuel battery 20 generates water through an electrochemical reaction. The fuel battery 20 discharges exhaust gas containing at least unreacted fuel, unreacted oxygen, and water vapor. The fuel battery 20 operates at a temperature of 700°C or higher in, for example, the SOFCs, and therefore the exhaust gas is also hot. The exhaust gas from the fuel battery 20 is supplied to the combustion unit 21 along an exhaust gas flow path.

The combustion unit 21 combusts the unreacted fuel contained in the exhaust gas supplied from the fuel battery 20. The combustion unit 21 combusts the unreacted fuel using an unreacted oxidant in the fuel battery 20, for example. The combustion unit 21 may include multiple gas outlets, for example. The multiple gas outlets may be positioned so as to be dispersed across a flat surface. Alternatively, the multiple gas outlets may be positioned so as to be dispersed across an inner peripheral surface of a cylinder.

The combustion unit 21 may be positioned alongside the fuel battery 20 in a direction perpendicular to or parallel to the stacking direction of the fuel cells making up the fuel battery 20. In a configuration where the combustion unit 21 is positioned alongside the fuel battery 20, the multiple gas outlets may be provided so as to be dispersed along the stacking direction.

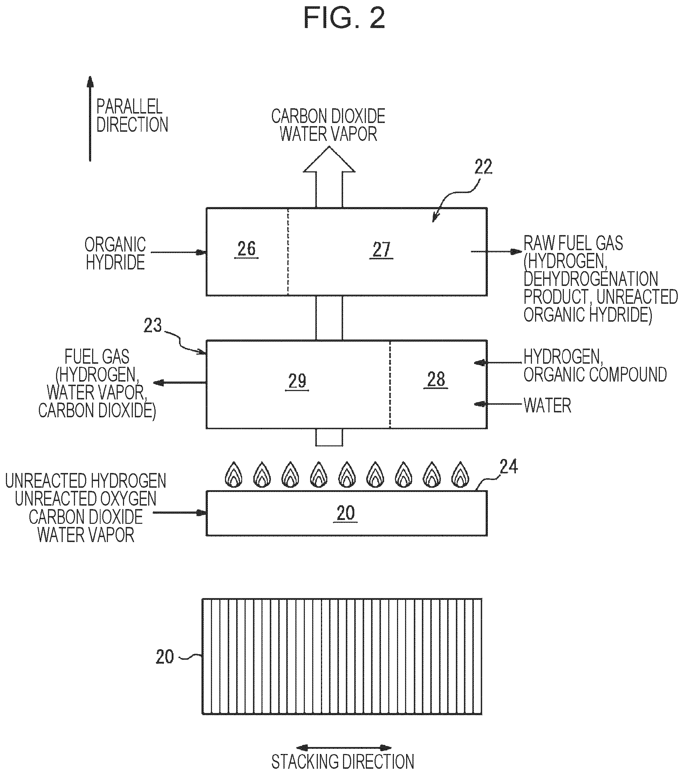

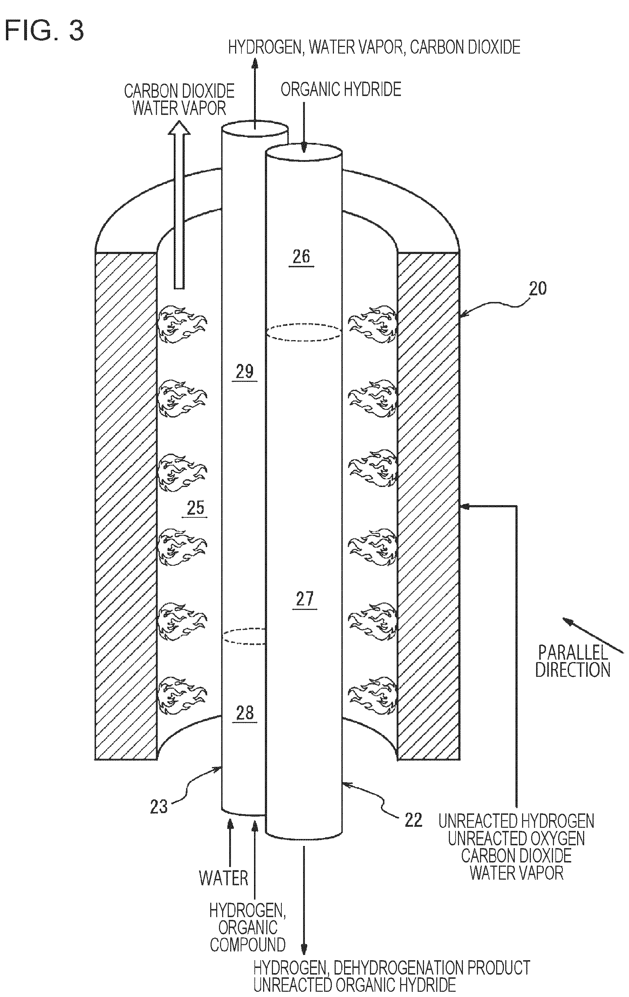

The first reactor 22 is provided opposite the combustion unit 21. As illustrated in FIG. 2, for the combustion unit 21 in which multiple gas outlets are positioned dispersed over a flat surface, the first reactor 22 may be provided opposite a surface 24 in which gas outlets are provided. Alternatively, as illustrated in FIG. 3, for a configuration in which multiple gas outlets are positioned so as to be dispersed over a cylindrical inner peripheral surface 25, the first reactor 22 may be provided opposite the inner peripheral surface 25.

As illustrated in FIGs. 2 and 3, the first reactor 22 may be supplied with an organic hydride, as described below. An organic hydride is an organic compound that can reversibly release hydrogen, such as methylcyclohexane, cyclohexane, and decalin. The first reactor 22 produces at least hydrogen and a dehydrogenation product from an organic hydride through a dehydrogenation reaction. Raw fuel gas containing hydrogen, a dehydrogenation product, and an unreacted organic hydride may be discharged from the first reactor 22. At least a portion of the hydrogen contained in the raw fuel gas is supplied to the fuel battery 20 as fuel, as described below.

The first reactor 22 may include a first vaporization section 26 and a dehydrogenation section 27. The first vaporization section 26 and the dehydrogenation section 27 may be separated from each other inside the first reactor 22 by an inner wall, for example. The first vaporization section 26 and the dehydrogenation section 27 may communicate with each other. The first reactor 22 may be provided inside the fuel battery module 10 so that the dehydrogenation section 27 is positioned downstream of the first vaporization section 26.

The first vaporization section 26 may vaporize an organic hydride. The first vaporization section 26 may be filled with filler in order to promote vaporization. The dehydrogenation section 27 may contain a dehydrogenation catalyst. The dehydrogenation section 27 may cause the organic hydride vaporized in the first vaporization section 26 to undergo a dehydrogenation reaction.

The second reactor 23 may be positioned between the first reactor 22 and the combustion unit 21. The second reactor 23 may be supplied with separated gas and water generated by combustion in the combustion unit 21. As discussed below, the separated gas is discharged from the first reactor 22 and may contain hydrogen and an organic compound supplied together with the hydrogen.

The second reactor 23 produces hydrogen and carbon dioxide from an organic compound through a steam reforming reaction, for example. The hydrogen supplied to the second reactor 23 may be discharged as is. Hydrogen, carbon dioxide, and unreacted water vapor may be discharged from the second reactor 23. Fuel gas produced by the second reactor 23 is supplied to the fuel battery 20.

The second reactor 23 may include a second vaporization section 28 and a reforming section 29. The second vaporization section 28 and the reforming section 29 may be separated from each other inside the second reactor 23 by an inner wall, for example. The second vaporization section 28 and the reforming section 29 may communicate with each other. The second reactor 23 may be provided inside the fuel battery module 10 so that the reforming section 29 is positioned downstream of the second vaporization section 28. Within the fuel battery module 10, the second vaporization section 28 may be disposed away from the first vaporization section 26. Specifically, the first vaporization section 26 and the second vaporization section 28 may be positioned apart from each other in a parallel direction in which the first reactor 22 and the second reactor 23 are arrayed. Furthermore, specifically, the first vaporization section 26 may be positioned at one end in the parallel direction and the second vaporization section 28 may be positioned at the other end in the parallel direction.

The second vaporization section 28 may vaporize water. The second vaporization section 28 may be filled with filler in order to promote vaporization. The reforming section 29 may contain a reforming catalyst. The reforming section 29 may cause an organic compound to undergo a reforming reaction using the water vaporized in the second vaporization section 28.

The combustion unit 21, the first reactor 22, and the second reactor 23 may be provided inside the container 19 in any positions and any orientations. The combustion unit 21, the first reactor 22, and the second reactor 23 may be provided vertically above the fuel battery 20 in correct installation positions for the fuel battery device 11, for example. Alternatively, the combustion unit 21, the first reactor 22, and the second reactor 23 may be provided vertically at the side of the fuel battery 20 in correct installation positions for the fuel battery device 11, for example. A partition wall may be provided between the combustion unit 21 and the fuel battery 20.

As illustrated in FIG. 1, the first heat exchanger 12 may carry out heat exchange between the raw fuel gas discharged from the first reactor 22 and the oxygen-containing gas supplied to the fuel battery 20. The raw fuel gas discharged from the first reactor 22 may be cooled by undergoing heat exchange with the oxygen-containing gas, and as a result, components having low boiling points in the raw fuel gas may be liquefied. The components having low boiling points in the raw fuel gas may be a dehydrogenation product and an organic hydride. The oxygen-containing gas may be discharged to the first heat exchanger 12 by being pressurized using a blower, for example. The oxygen-containing gas may be heated via heat exchange and supplied to the fuel battery 20.

The second heat exchanger 13 may carry out exchange heat between a heat medium and the raw fuel gas, which has undergone heat exchange in the first heat exchanger 12. The second heat exchanger 13 may be supplied with a liquefied component along with the raw fuel gas. The heat medium may be a liquid. The heat medium may be water. The raw fuel gas discharged from the first heat exchanger 12 may be further cooled by undergoing heat exchange with the heat medium, and this may further liquefy components having low boiling points.

The storage unit 14 may be connected to the first reactor 22 via the first heat exchanger 12 and the second heat exchanger 13. The storage unit 14 may store a dehydrogenation product contained in the raw fuel gas. The storage unit 14 may store an organic hydride contained in the raw fuel gas. The storage unit 14 may, for example, separate the dehydrogenation product and the organic hydride liquefied by heat exchange in the first heat exchanger 12 and the second heat exchanger 13 from the hydrogen gas and store the dehydrogenation product and the organic hydride. The liquefied dehydrogenation product and organic hydride may be separated from the hydrogen gas by a first gas-liquid separator 30, for example, which is provided between the second heat exchanger 13 and the storage unit 14. The first gas-liquid separator 30 may supply separated gas to the second reactor 23, the separated gas mainly consisting of hydrogen gas separated from the raw fuel gas. The separated gas may contain a gaseous dehydrogenation product and a gaseous organic hydride that were not liquefied as the organic compound mentioned above.

The third heat exchanger 15 may perform heat exchange between exhaust gas discharged from the fuel battery module 10 and the heat medium that underwent heat exchange in the second heat exchanger 13. The exhaust gas discharged from the fuel battery module 10 may specifically be exhaust gas from combustion performed in the combustion unit 21. The exhaust gas may include carbon dioxide, oxygen, water vapor, nitrogen, and so on. The water vapor in the exhaust gas from the fuel battery module 10 may be liquefied as the exhaust gas is cooled by undergoing heat exchange with a heat medium.

Water liquefied by heat exchange in the third heat exchanger 15 may be separated from the exhaust gas by a second gas-liquid separator 31. The separated water may be stored in a reformation water tank 32. The water stored in the reformation water tank 32 may be pressurized by a pump 33 and supplied to the second reactor 23.

The heat sink 16 may cool the heat medium used to perform heat exchange in the third heat exchanger 15. The heat sink 16 may circulate the cooled heat medium to the second heat exchanger 13. The heat sink 16 is, for example, a radiator. Heat may be recovered from the heat medium used in heat exchange in the third heat exchanger 15, and then utilized.

The first supply channel 17 and the second supply channel 18 may be switchably connected to the first reactor 22. For example, the first reactor 22 may be connected to the first supply channel 17 and the second supply channel 18 via a three-way valve 34. The organic hydride may be supplied to the first supply channel 17 from outside the fuel battery device 11. First fuel may be supplied to the second supply channel 18 from outside the fuel battery device 11. The first fuel may be any substance that can be used as fuel for the fuel battery 20. The first fuel is hydrogen, for example.

The fuel battery module 10 of this embodiment having the above-described configuration includes the combustion unit 21 and the first reactor 22. The combustion unit 21 combusts unreacted fuel, in the fuel battery 20, supplied thereto along a flow path for an exhaust gas containing the unreacted fuel. The first reactor 22 is positioned opposite the combustion unit 21 and produces at least hydrogen and a dehydrogenation product from an organic hydride via a dehydrogenation reaction. At least part of the hydrogen produced by the first reactor 22 is supplied to the fuel battery 20 as fuel. With this configuration, the fuel battery module 10 can allow the high-temperature heat for operation of the fuel battery 20 to be used for an endothermic reaction of the organic hydride, while also allowing the high-temperature heat generated by combustion of the unreacted fuel to be used for endothermic reaction of the organic hydride. Therefore, the fuel battery module 10 can stably generate electricity even when the amount of heat for operation of the fuel battery 20 fluctuates depending on the amount of electricity generated, with a relatively simplified configuration such as the combustion unit 21.

The fuel battery module 10 further includes the second reactor 23. The second reactor 23 is positioned between the first reactor 22 and the combustion unit 21 and reforms an organic compound discharged from the first reactor 22 and supplied together with hydrogen. Hydrogen contained in the raw fuel gas discharged from the first reactor 22 is separated from organic compounds such as the dehydrogenation product and the organic hydride using the first gas-liquid separator 30, etc., but complete separation is difficult. Therefore, some organic compounds are commonly discharged together with hydrogen to the supply channel of the fuel battery 20. With respect to such an occurrence, since the fuel battery module 10 having the above-described configuration reforms the mixed-in organic compounds into hydrogen, the effect of organic compounds being supplied to the fuel battery 20 can be reduced.

In addition, in the fuel battery module 10, the second vaporization section 28, which is included in the second reactor 23, is positioned away from the first vaporization section 26, which is included in the first reactor 22. In both the first reactor 22 and the second reactor 23, the vaporization of an organic hydride and water at room temperature absorbs more heat than the dehydrogenation and reforming reactions in later stages. Therefore, the drops in temperature in the vicinity of the first vaporization section 26 and the second vaporization section 28 are significant. With respect to such an occurrence, the fuel battery module 10 having the above-described configuration can homogenize the temperature distribution throughout the first reactor 22 and the second reactor 23. The fuel battery module 10 can contribute to the homogenization of the temperature distribution of the fuel cells making up the fuel battery 20, for example, by homogenizing the temperature distribution.

The fuel battery device 11 of this embodiment includes the fuel battery module 10 and the storage unit 14. The storage unit 14 is connected to the first reactor 22 via the first heat exchanger 12 and the second heat exchanger 13 and stores a dehydrogenation product. With this configuration, the fuel battery device 11 can recover a dehydrogenation product that can be used for hydrogen storage and transportation and the recovered dehydrogenation product can be used as raw material for hydrogenation at a hydrogen supply site.

In the fuel battery device 11 of this embodiment, the first heat exchanger 12 performs heat exchange between the raw fuel gas discharged from the first reactor 22 and the oxygen-containing gas supplied to the fuel battery 20. The higher the temperature of the oxygen-containing gas supplied to the fuel battery 20, the higher the power generation efficiency. With respect to such an occurrence, the fuel battery device 11 having the above-described configuration can effectively utilize the heat of the raw fuel gas that needs to be cooled.

In the fuel battery device 11 of this embodiment, the second heat exchanger 13 performs heat exchange between the raw fuel gas that has undergone heat exchange in the first heat exchanger 12 and a heat medium. With this configuration, the fuel battery device 11 can improve the recovery of a dehydrogenation product by further cooling the raw fuel gas.

The fuel battery device 11 of this embodiment further includes the third heat exchanger 15. The third heat exchanger 15 performs heat exchange between the exhaust gas discharged from the fuel battery module 10 and the heat medium that has undergone heat exchange in the second heat exchanger 13. With this configuration, the fuel battery device 11 can be simplified because the supply path of the heat medium for recovering reformed water from the exhaust gas also serves as the supply path of the heat medium for cooling the raw fuel gas.

The fuel battery device 11 of this embodiment further includes the heat sink 16 that cools the heat medium that has undergone heat exchange in the third heat exchanger 15 and circulates the cooled heat medium to the second heat exchanger 13. With this configuration, the fuel battery device 11 can adequately cool the heat medium and maintain the recovered amounts of a dehydrogenation product and reformed water.

In addition, in the fuel battery device 11 of this embodiment, the first supply channel 17 that supplies an organic hydride to the first reactor 22 and the second supply channel 18 that supplies the first fuel can be switched between. During the period from the start of operation of the fuel battery 20 to the start of power generation, a situation may occur in which the temperature around the fuel battery 20 is low and not enough heat is generated for dehydrogenation. With respect to such a situation, the fuel battery device 11 having the above-described configuration can supply the first fuel directly to the fuel battery 20 via the second supply channel 18. Therefore, the fuel battery device 11 can start supplying the first fuel to the fuel battery 20 even at relatively low temperatures.

In an embodiment, (1) a fuel battery module includes:
a container;
a fuel battery housed in the container;
a combustion unit housed in the container and configured to combust unreacted fuel, from the fuel battery, supplied thereto along a flow path for an exhaust gas containing the unreacted fuel; and
a first reactor housed in the container, positioned opposite the combustion unit, and configured to produce at least hydrogen and a dehydrogenation product from an organic hydride through a dehydrogenation reaction.

At least a portion of the hydrogen produced by the first reactor is supplied to the fuel battery as the fuel.

(2) In the fuel battery module of (1),
in the fuel battery module of claim 1,
the first reactor includes a first vaporization section configured to vaporize the organic hydride and a dehydrogenation section provided downstream of the first vaporization section and containing a dehydrogenation catalyst.

(3) The fuel battery module of (2) further includes
a second reactor housed in the container, positioned between the first reactor and the combustion unit, and configured to reform an organic compound discharged from the first reactor and supplied together with the hydrogen.

(4) In the fuel battery module of (3),
the second reactor includes a second vaporization section configured to vaporize water used for reforming the organic compound and a reforming section provided downstream of the second vaporization section and configured to contain a reforming catalyst.

(5) In the fuel battery module of (4),
the second vaporization section is disposed away from the first vaporization section.

In an embodiment, (6) a fuel battery device includes:
the fuel battery module of any one of (1) to (5); and
a storage unit connected to the first reactor via a first heat exchanger and a second heat exchanger and configured to store the dehydrogenation product.

(7) In the fuel battery device of (6),
the first heat exchanger is configured to perform heat exchange between a gas discharged from the first reactor and an oxygen-containing gas supplied to the fuel battery.

(8) In the fuel battery device of (7),
the second heat exchanger is configured to perform exchange between a heat medium and the gas that has undergone heat exchange in the first heat exchanger.

(9) The fuel battery device of (8) further includes
a third heat exchanger configured to perform heat exchange between an exhaust gas discharged from the fuel battery module and the heat medium that has undergone heat exchange in the second heat exchanger.

(10) The fuel battery device of (9) further includes
a heat sink configured to cool the heat medium that has undergone heat exchange in the third heat exchanger and circulate the cooled heat medium to the second heat exchanger.

(11) In the fuel battery device of any one of (6) to (10)
the first reactor is switchably connectable to a first supply channel for supplying the organic hydride and a second supply channel for supplying the first fuel.

The drawings illustrating the embodiments of the present disclosure are schematic drawings. The dimensional proportions and so on in the drawings do not necessarily match the actual dimensional proportions and so on.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts.

All of the constituent elements described in the present disclosure and/or all of the disclosed methods or all of the steps of disclosed processing can be combined in any combination, except for combinations in which their features would be mutually exclusive. Each of the features described in the present disclosure may be replaced by alternative features that serve the same, equivalent, or similar purposes, unless explicitly stated to the contrary. Therefore, unless explicitly stated to the contrary, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

In the present disclosure, "first", "second", and so on are identifiers used to distinguish between such configurations. Regarding the configurations, "first", "second", and so on used to distinguish between the configurations in the present disclosure may be exchanged with each other. For example, identifiers "first" and "second" may be exchanged between the first heat exchanger and the second heat exchanger. Exchanging of the identifiers take place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in this disclosure is not to be used as a basis for interpreting the order of such configurations or the existence of identifiers with smaller numbers.

### REFERENCE SIGNS

- 10: fuel battery module
- 11: fuel battery device
- 12: first heat exchanger
- 13: second heat exchanger
- 14: storage unit
- 15: third heat exchanger
- 16: heat sink
- 17: first supply unit
- 18: second supply unit
- 19: container
- 20: fuel battery
- 21: combustion unit
- 22: first reactor
- 23: second reactor
- 24: surface in which gas outlets are provided
- 25: inner peripheral surface
- 26: first vaporization section
- 27: dehydrogenation section
- 28: second vaporization section
- 29: reforming section
- 30: first gas-liquid separator
- 31: second gas-liquid separator
- 32: reformation water tank
- 33: pump
- 34: three-way valve

## Claims

1. A fuel battery module comprising:
a container;
a fuel battery housed in the container;
a combustion unit housed in the container and configured to combust unreacted fuel, from the fuel battery, supplied thereto along a flow path for an exhaust gas containing the unreacted fuel; and
a first reactor housed in the container, positioned opposite the combustion unit, and configured to produce at least hydrogen and a dehydrogenation product from an organic hydride through a dehydrogenation reaction,
wherein at least a portion of the hydrogen produced by the first reactor is supplied to the fuel battery as the fuel.

2. The fuel battery module according to claim 1,
wherein the first reactor includes a first vaporization section configured to vaporize the organic hydride and a dehydrogenation section provided downstream of the first vaporization section and containing a dehydrogenation catalyst.

3. The fuel battery module according to claim 2, further comprising:
a second reactor housed in the container, positioned between the first reactor and the combustion unit, and configured to reform an organic compound discharged from the first reactor and supplied together with the hydrogen.

4. The fuel battery module according to claim 3,
wherein the second reactor includes a second vaporization section configured to vaporize water used for reforming the organic compound and a reforming section provided downstream of the second vaporization section and configured to contain a reforming catalyst.

5. The fuel battery module according to claim 4,
wherein the second vaporization section is disposed away from the first vaporization section.

6. A fuel battery device comprising:
the fuel battery module according to any one of claims 1 to 5; and
a storage unit connected to the first reactor via a first heat exchanger and a second heat exchanger and configured to store the dehydrogenation product.

7. The fuel battery device according to claim 6,
wherein the first heat exchanger is configured to perform heat exchange between a gas discharged from the first reactor and an oxygen-containing gas supplied to the fuel battery.

8. The fuel battery device according to claim 7,
wherein the second heat exchanger is configured to perform heat exchange between a heat medium and the gas that has undergone heat exchange in the first heat exchanger.

9. The fuel battery device according to claim 8, further comprising:
a third heat exchanger configured to perform heat exchange between an exhaust gas discharged from the fuel battery module and the heat medium that has undergone heat exchange in the second heat exchanger.

10. The fuel battery device according to claim 9, further comprising:
a heat sink configured to cool the heat medium that has undergone heat exchange in the third heat exchanger and circulate the cooled heat medium to the second heat exchanger.

11. The fuel battery device according to any one of claims 6 to 10,
wherein the first reactor is switchably connectable to a first supply channel for supplying the organic hydride and a second supply channel for supplying the first fuel.
